# EUROPÄISCHE PATENTSCHRIFT

(11) **EP 3 056 096 B1**
(45) Veröffentlichungstag und Bekanntmachung des Hinweises auf die Patenterteilung: **24.07.2019**
(21) Anmeldenummer: 15020018.6
(22) Anmeldetag: 05.02.2015
(51) Int. Cl.: A23L 33/15, A23L 33/16, A23L 33/175, A23L 33/10

(54) **Verwendung eines Nahrungsergänzungsmittels enthaltend Kreatin zur Reduktion des natürlichen Schlafbedarfs oder zur schnelleren Anpassung der zirkadianen Rhythmik an neue Zeitzonen**
Use of a nutritional supplement containing creatine for reducing the natural sleep need or for faster adaptation of circadian rhythm to new time zones
Utilisation d'un complément alimentaire contenant de la créatine pour réduire le besoin naturel de sommeil ou pour adapter plus rapidement le rythme circadien à de nouveaux fuseaux horaires

(43) Veröffentlichungstag der Anmeldung: 17.08.2016
(73) Patentinhaber: Smart Sleep GmbH, 40699 Erkrath (DE)
(72) Erfinder: DWORAK, Markus, 40699 Erkrath (DE)

(56) Entgegenhaltungen:
- EP-A1- 2 377 578
- EP-A1- 2 918 177
- WO-A2-2004/058160
- WO-A2-2005/089734
- WO-A2-2007/095605
- DE-A1- 19 929 995
- DE-A1-102007 030 495
- DE-A1-102007 062 288
- US-A1- 2007 065 511
- COOK CHRISTIAN J ET AL: "Skill execution and sleep deprivation: effects of acute caffeine or creatine supplementation - a randomized placebo-controlled trial", JOURNAL OF THE INTERNATIONAL SOCIETY OF SPORTS NUTRITION, BIOMED CENTRAL LTD, LO, Bd. 8, Nr. 1, 16. Februar 2011 (2011-02-16), Seite 2, XP021089483, ISSN: 1550-2783, DOI: 10.1186/1550-2783-8-2
- DATABASE WPI Week 201434 Thomson Scientific, London, GB; AN 2014-J02437 XP002742817, & JP 2014 085214 A (DOKURITSU GYOSEI HOJIN SANGYO GIJUTSU SO) 12. Mai 2014 (2014-05-12)
- DASH MICHAEL B ET AL: "Long-term homeostasis of extracellular glutamate in the rat cerebral cortex across sleep and waking states.", THE JOURNAL OF NEUROSCIENCE : THE OFFICIAL JOURNAL OF THE SOCIETY FOR NEUROSCIENCE 21 JAN 2009, vol. 29, no. 3, 21 January 2009 (2009-01-21), pages 620-629, ISSN: 1529-2401
- Aleksandar Jeremic ET AL: "ATP stimulates calcium-dependent glutamate release from cultured astrocytes : ATP-evoked astrocyte glutamate release", JOURNAL OF NEUROCHEMISTRY, vol. 77, no. 2, 15 April 2001 (2001-04-15) , pages 664-675, XP055386357, NEW YORK, NY, US ISSN: 0022-3042, DOI: 10.1046/j.1471-4159.2001.00272.x
- VYAZOVSKIY VLADYSLAV V ET AL: "Cortical Firing and Sleep Homeostasis", NEURON, vol. 63, no. 6, September 2009 (2009-09), pages 865-878, ISSN: 0896-6273
- TURSKY T: "INHIBITION OF BRAIN GLUTAMATE DECARBOXYLASE BY ATP", EUROPEAN JOURNAL OF BIOCHEMISTRY, vol. 12, no. 3, 1970, pages 544-549, ISSN: 0014-2956
- ALTMAN BRIAN J ET AL: "From Krebs to clinic: glutamine metabolism to cancer therapy.", NATURE REVIEWS. CANCER 10 2016, vol. 16, no. 10, 2016, pages 619-634, ISSN: 1474-1768
- NELSON D ET AL: "Glutamine Catabolism by Heart Muscle: Regulation of Phosphate-Activated Glutaminase by ATP, Citrate, and Chloride", ARCHIVES OF BIOCHEMISTRY AND BIOPHYSICS, ACADEMIC PRESS, US, vol. 314, no. 2, 1 November 1994 (1994-11-01), pages 376-383, XP024752559, ISSN: 0003-9861, DOI: 10.1006/ABBI.1994.1456 [retrieved on 1994-11-01]
- DWORAK MARKUS ET AL: "Sleep and Brain Energy Levels: ATP Changes during Sleep", JOURNAL OF NEUROSCIENCE, vol. 30, no. 26, June 2010 (2010-06), pages 9007-9016, ISSN: 0270-6474
- DWORAK MARKUS ET AL: "Creatine supplementation reduces sleep need and homeostatic sleep pressure in rats.", JOURNAL OF SLEEP RESEARCH JUN 2017, vol. 26, no. 3, June 2017 (2017-06), pages 377-385, ISSN: 1365-2869
- SAXTON ROBERT A; SABATINI DAVID M: "mTOR Signaling in Growth, Metabolism, and Disease.", CELL, vol. 168, no. 6, 9 March 2017 (2017-03-09) , pages 960-976, ISSN: 0092-8674, DOI: 10.1016/j.cell.2017.02.004

## Beschreibung

Schlaf ist essenziell für das menschliche Leben und spielt eine zentrale Rolle für die menschliche Gesundheit, körperliche und mentale Leistungsfähigkeit und das Wohlbefinden. Im Schlaf laufen spezifische Regenerationsprozesse ab, die essentiell für eine normale Funktionsweise des Nervensystems, des Immunsystems, des Zellstoffwechsels und der Proteinsynthese sind. Schlaf spielt zudem eine zentrale Rolle für die kognitive und mentale Leistungsfähigkeit, da in einzelnen Schlafphasen die am Tage aufgenommenen Informationen verarbeitet und abgespeichert werden (Gedächtniskonsolidierung). Viele dieser zentralen Prozesse können ausschließlich im Schlaf ablaufen, da nur dort die Rahmenbedingungen für diese physiologischen Vorgänge gegeben sind.

In eigenen Studien konnten wir zeigen, dass die Stoffwechselvorgänge im Gehirn eine zentrale Rolle in der Schlafregulation und auch Funktion des Schlafes spielen. In diesen Studien konnten wir u.a. zeigen, dass Schlaf (v.a. Tiefschlaf) primär von einem Molekül namens Adenosin reguliert wird, welches aus dem Abbau des Hauptenergieträgers unseres Körpers Adenosin-Triphosphat (ATP) entsteht. Wenn im Wachzustand das Gehirn auf Hochtouren Informationen verarbeitet, verbraucht es Energie (in der Form von ATP). Wenn die Energie fortlaufen gebraucht wird, wird ATP in einer Kaskade zu Adenosin abgebaut. Adenosin hemmt die über spezielle Rezeptoren (v.a. AD A1 Rezeptor) die Nervenaktivität, macht müde und fördert das Einschlafen und den Tiefschlaf. Adenosin-Rezeptorblocker (z.B. Koffein) können dagegen die Wachheit fördern und stimulierend wirken. In weiteren Studien konnten wir zeigen, dass Schlaf wichtig für die Auffüllung der Energiespeicher im Gehirn ist, ein Vorgang, der nur im Schlaf stattfinden kann, da am Tag die energieverbrauchende Gehirnaktivität mit einem permanenten Verbrauch von Adenosin-Triphosphat (ATP) verbunden ist (Dworak et al., 2010). Die Tiefschlafphasen (slow-wave-sleep, NREM Delta-Aktivität zwischen 0.5-4.5 Hz) korrelieren mit den zellulären ATP-Konzentrationen und der Aktivität der Adenosin-Monophosphat aktivierten ProteinKinase (AMPK), einem zellulären Regulator anaboler und kataboler Prozesse (Dworak et al., 2010; Dworak et al., 2011). Diese im Tiefschlaf gebildete Energie wird anschließend (u.a. in der REM-Phase) gebraucht um anabole Prozesse und strukturelle Veränderungen (Proteinsynthese, synaptische Nervenverbindungen) zu ermöglichen oder nachfolgende Regenerations- / oder Proliferationsprozesse auszulösen (Dworak et al., 2010).

Aufgrund der zentralen Bedeutung des Schlafs in zahlreichen physiologischen Prozessen, verbringt jeder Mensch ca. ein Drittel seines Lebens in diesem Verhaltensstadium. Die durchschnittliche Schlafdauer eines gesunden Erwachsenen beträgt im Durschnitt 7,5 - 8,0 Stunden. Personengruppen mit überdurchschnittlichen Anforderungen (Profisportler, Schwangere, Kinder & Jugendliche in der Wachstumsphase) können einen höheren Schlafbedarf aufweisen.

In der heutigen Gesellschaft bleibt vielen Menschen zu wenig Zeit für die benötigten 7,5-8,0 Stunden Nachtschlaf. Die Folgen von Schlafmangel sind vielfältig. Aktuelle Erhebungen der Weltgesundheitsorganisation haben ergeben, dass ungefähr 30 Prozent der Bevölkerung in den Industriestaaten von Schlafstörungen betroffen sind, ausgelöst durch Schlafmangel oder nicht erholsamen Schlaf. Auch jeder zweite Deutsche klagt mittlerweile über mangelnde Erholung im Schlaf, obwohl nur etwa eine Million Deutsche ernsthafte Schlafstörungen aufweisen. Schlafprobleme führen zu Tagesmüdigkeit, schlechter Konzentration und fördern langfristig die Entstehung von Übergewicht, Diabetes und Herz-Kreislauf-Erkrankungen. Auch eine geringe Schlafqualität kann zur Tagesmüdigkeit führen, selbst wenn keine klinisch relevanten Einschlaf- oder Durchschlafstörungen vorliegen. Zusätzlich kann die nächtliche Regeneration im Schlaf durch den Konsum verschiedener Lebens- und Genussmittel (z.B. Alkohol, Koffein), sowie einige Pharmazeutika gestört werden. Eine Unterstützung dieser Regenerationsprozesse kann wiederum die Schlafqualität steigern, so dass der Schlaf als deutlich erholsamer empfunden wird.

Unzureichender Schlaf und Schlafmangel führt auch bei Personen ohne manifestierte Schlafstörungen zu einer erhöhten Tagesmüdigkeit, einer verringerten Vigilanz (Wachheit), einer eingeschränkten Konzentrationsfähigkeit und einer Abnahme der körperlichen und mentalen Leistungsfähigkeit. Die können auch bei schlafgesunden Personen die Leistungsfähigkeit am nächsten Tag nachteilig beeinflussen und zu einer Tagesmüdigkeit führen. Dabei hängt die aus dem Schlafmangel resultierende Abnahme der Vigilanz und der Leistungsfähigkeit bzw. die Zunahme der Tagesschläfrigkeit primär von der Schlafdauer und nächtlichen Regeneration ab.

Die Ursachen von Schlafmangel und unzureichender nächtlicher Regeneration sind in den meisten Fällen auf Depressionen, Angstzustände, akute Belastungsreaktionen, Stress, Bewegungsmangel, Unzufriedenheit, Unausgeglichenheit und falsche Ernährungsgewohnheiten zurückzuführen. Auch Ungleichgewichte im Vitalstoffhaushalt können die Schlafqualität negativ beeinflussen. Aus falschen Ernährungsgewohnheiten resultiert häufig ein Mangel an bestimmten Vitaminen, Mineralstoffen sowie Spurenelementen, durch den die Nervenzellen ungenügend versorgt werden und sich die Schlafqualität verschlechtert. Schlafmangel selber erhöht ebenfalls den Vitalstoffbedarf. Da die meisten Ursachen von Schlafmangel wie z.B. Geschäftsreisen, Termindruck, eine hohe Arbeitsbelastung, oder kleine Kinder nicht immer direkt behoben werden können, ist eine Reduktion des nächtlichen Schlafbedarfs von großer Bedeutung für viele Personengruppen. Zu diesen Personengruppen zählen u.a. Geschäftsleute, Leistungssportler, Schichtarbeiter, Studenten oder junge Eltern.

Aktuell existieren primär pharmakologisch wirkende Schlafmittel, die die Entspannung fördern oder den Schlaf künstlich herbeiführen. Diese Schlafmittel beeinflussen den Schlaf auf unnatürliche Weise, sind z.T. mit starken Nebenwirkungen und der Gefahr der Abhängigkeit verbunden und zudem nur für vereinzelte Personengruppen mit diagnostizierten Schlafproblemen zu empfehlen. Bisher existiert jedoch keine Kombination aus Nährstoffen, die auf natürliche Weise die natürlichen Erholungsprozesse im Schlaf beschleunigt und dadurch den natürlichen Schlafbedarf reduziert.

Hieraus ergibt sich der Bedarf für ein Nahrungsergänzungsmittel, welches die natürlichen Funktionen des Schlafes beschleunigt, indem es die Regeneration zellulärer Energiespeicher in Gehirn und Muskulatur beschleunigt und dadurch schneller die restaurativen Komponenten des Schlafes (Proteinsynthese, Ausschüttung von Wachstumshormonen, erhöhte Schlafeffizienz und Schlafqualität) herbeiführt; frei von Nebenwirkungen ist und für alle Personengruppen uneingeschränkt anwendbar ist.

Die WO2007095605 beschreibt ein Verfahren zur Beschleunigung der Wiedererlangung eines zirkadianen Rhythmus bei einem menschlichen Patienten unter Verwendung eines Pheromons oder eines Pheromon-Analogons.

DE19929995 beschreibt die Verwendung von Kreatin zur positiven Beeinflussung der Schlafqualität zur Erzielung eines erholsameren Schlafes und zur Beeinflussung des Schlaf-Wach-Rhythmus.

Die WO2004/058160 beschreibt ein Verfahren zur Normalisierung des Schlaf/Wach-Zyklus eines Säugers durch Verabreichung einer Kreatin-enthaltenden Substanz. Auf eine Reduktion des natürlichen Schlafbedarfs oder zirkadiane Rhythmik wird nicht eingegangen.

Dieses Problem wird durch die Im Patentanspruch 1 aufgeführten Merkmale gelöst.

Ein Nahrungsmittel zur Reduktion des natürlichen Schlafbedarfs basiert auf einer speziellen Mischung aus Kreatin, Vitaminen, Mineralstoffen und/ oder Aminosäuren. Kreatin ist eine organische Säure, die als Nahrungsergänzungsmitte im Kraftsport eingesetzt wird. Es dient zur Verbesserung der muskulären Energieversorgung und der kurzfristigen Leistungssteigerung im Kraft- und Schnellkraftbereich. Der Einsatz von Kreatin in der Reduktion des natürlichen Schlafbedarfs wurde in unseren Studien untersucht, ist bisher nicht bekannt und wird nicht in diesem Bereich angewendet. Die hier dargestellte Erfindung befriedigt ein lang bestehendes Bedürfnis: Ein geringerer Schlafbedarf durch eine Beschleunigung der schlafspezifischen Erholungsprozess und / oder eine schnelleren Anpassung des Schlaf-Wach-Rhythmus nach Reisen durch ein oder mehrere Zeitzonen.

Gelöst wird dieses Bedürfnis durch das hier dargestellte Nahrungsergänzungsmittel, das Kreatin enthält und die schlafspezifischen Regeneration beschleunigt.

Die Neuheit der Anwendung besteht u.a. darin, dass Kreatin in der Menge von 1-5 Gramm mit oder ohne dem Zusatz von Vitaminen, Mineralstoffen und/ oder Aminosäuren am Abend 120 Minuten bis unmittelbar vor dem Schlaf eingesetzt wird, um die nächtlichen Regenerationsprozesse im Gehirn und Körper während des Schlafes zu beschleunigen.

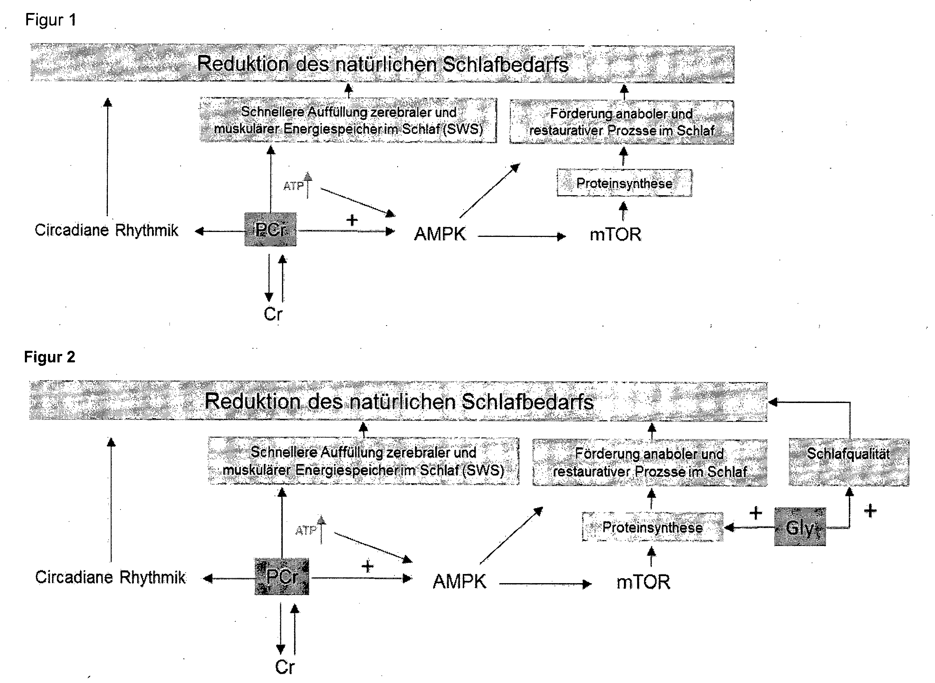

Durch diese abgestimmte Nährstoffkombination werden die biochemischen Stoffwechselprozesse im Schlaf gezielt unterstützt. In eigenen tier- und humanexperimentellen Studien konnten wir zeigen, dass eine Nahrungsergänzung mit Kreatin am Abend das Schlafbedürfnis signifikant reduzieren kann. Unsere Studien haben weiterhin gezeigt, dass die einmalige und chronische (4 Wochen) Einnahme von Kreatin den homöostatischen Tiefschlafanteil und die spontane Schlafdauer signifikant reduziert, was eine Reduktion des Schlafbedarfs hindeutet. Auf zellulärer Ebene unterstützt Kreatin die Regeneration der zellulären Energiespeicher, vor allem durch eine Zunahme der zellulären Kreatinphosphat (PCr)-Konzentrationen. Hohe zelluläre Energielevel fördern die Proteinsynthese u.a. durch eine Aktivierung der Adenosin-Monophosphat aktivierte Proteinkinase (AMPK) und der mTOR (mammalian target of rapamycin) Signalkaskade. Durch die Einnahme von Kreatin vor dem Schlaf kommt es durch die proenergetische Wirkung der Substanz zu einer beschleunigten Regeneration zellulärer Energiespeicher, v.a. in den NREM slow-wave-sleep Phasen (Tiefschlaf, Stadium 3+4) (Figur 1).

Frühe tierexperimentelle Studien haben bereits gezeigt, dass Kreatin einen beschleunigenden Effekt auf die zirkadiane Rhythmik hat. In eigenen Humanstudien konnten wir zeigen, dass das Müdigkeitsgefühl nach Reisen durch mehrere Zeitzonen (Zeitdifferenz 6-9 Stunden) reduziert war, sowie die Anpassung an die neue Zeitzone durch die Gabe von 1-4 Gramm Kreatin vor dem Schlaf verbessert wurde.

Die Kombination von Kreatin mit ausgewählten Mineralstoffen, Vitaminen und Aminosäuren führt zu einer positiven Wechselwirkung der einzelnen Substanzen, die den Effekt der Einzelsubstanzen verstärken.

In einer bevorzugten Ausführungsform enthält das Nahrungsergänzungs-mittel neben Kreatin (1-5 g) außerdem noch Glycin. Glycin ist die kleinste und einfachste α-Aminosäure und spielt eine zentrale Rolle in der Bildung neuer Proteine und der Zellregeneration. Glycin ist weiterhin einer der Bausteine von Kreatin und kann die körpereigene Kreatin-Synthese ankurbeln. In Kombination mit Kreatin kann Glycin die schlafspezifischen Regenerationsprozesse weiter verstärken. Weiterhin fördert Glycin die Ausschüttung des Wachstumshormons GH, welches vor allem im Tiefschlaf freigesetzt wird und eine zentrale Bedeutung in der Regeneration und dem Ablauf anaboler Prozesse hat. Die Zugabe von Glycin zu dem Nahrungsergänzungsmittel mit Kreatin hat einen synergistischen Effekt und führt zu einer besseren schlafspezifischen Regeneration und Schlafqualität, Reduktion der Tagesschläfrigkeit und Steigerung der Vigilanz als Kreatin in der Monoverabreichung und gegenüber Placebo (Figur 2).

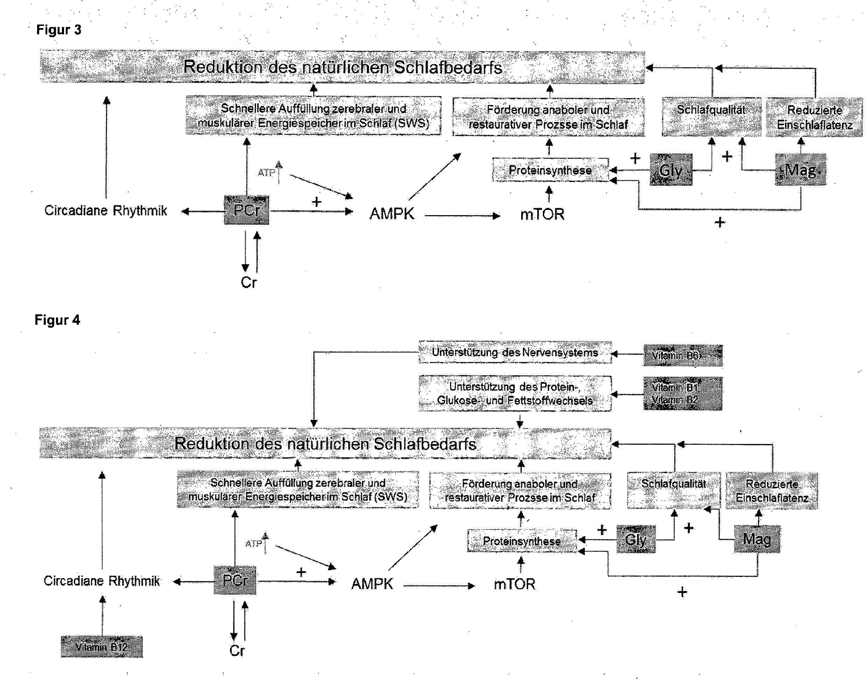

In einer bevorzugten Ausführungsform enthält das Nahrungsergänzungs-mittel außerdem noch einen oder mehrere Mineralstoffe. Als bevorzugter Mineralstoff kann insbesondere Magnesium genannt werden. Das Magnesium kann in Form üblicher Salze in dem Nahrungsergänzungsmittel vorliegen. Der Mineralstoff Magnesium ist ein zentrales Element im Energiestoffwechsel des Körpers und spielt als Coenzym im Stoffwechsel von vielen Proteinen eine wichtige Rolle. Da Magnesium die Funktion von Glycin im Proteinstoffwechsel unterstützt, optimiert es die Regeneration im Schlaf zusätzlich. Die sich durch die zusätzliche Anwesenheit von Glycin und Magnesium ergebenden Wechselwirkungen der Komponenten des Nahrungsergänzungsmittels sind in Figur 3 schematisch dargestellt. Glycin (Gly) und Magnesium (Mag) unterstützen die Proteinsynthese. Magnesium kann das Einschlafen fördern, sowie den Tiefschlafanteil und die Schlafeffizienz erhöhen. Durch diese Mechanismen kann der Zusatz von Magnesium zu Kreatin und/ oder Glycin die schlafspezifische Regeneration und Schlafqualität erhöhen und die Tagesschläfrigkeit und das Müdigkeitsgefühl am nächsten Tag reduzieren im Vergleich zu den Einzelsubstanzen und Placebo (Figur 3).

Das Nahrungsergänzungsmittel kann außerdem ein oder mehrere Vitamine aus der Vitamin-B-Gruppe enthalten. Beispielhaft können Vitamin B1, Vitamin B2, Nicotinsäure (auch als Niacin oder Vitamin B3 bezeichnet) oder eines ihrer Salze, Pantothensäure (auch als Vitamin B5 bezeichnet) oder eines ihrer Salze, Vitamin B6, Vitamin B7 (auch als Biotin bezeichnet) oder Gemische aus mindestens zwei dieser Verbindungen genannt werden. Bevorzugt enthält das Nahrungsergänzungsmittel zumindest die folgenden Vitamine der Vitamin-B-Gruppe: Vitamin B1, Vitamin B2, Vitamin B3, Vitamin B5, Vitamin B6 und Vitamin B12. Optional kann das Nahrungsergänzungsmittel noch weitere Vitamine wie z.B. Vitamin C enthalten. Die Zugabe von B-Vitaminen zu dem Nahrungsergänzungsmittel mit Kreatin und/ oder Glycin hat einen synergistischen Effekt und führt zu einer verbesserten schlafspezifischen Regeneration und einer höheren Schlafqualität, sowie einer Reduktion der Tagesschläfrigkeit und Steigerung der Vigilanz als Kreatin in der Monoverabreichung und gegenüber Placebo (Figur 4).

Das Nahrungsergänzungsmittel kann außerdem noch ein oder mehrere Spurenelemente enthalten. Zink kann in Form üblicher Salze in dem Nahrungsergänzungsmittel vorliegen.

Zusätzlich zu dem Glycin kann das Nahrungsergänzungsmittel noch weitere proteinogene alpha-Aminosäuren enthalten. Beispielhaft können in diesem Zusammenhang Alanin, Arginin, Asparaginsäure, Cystein, Histidin, Prolin, Serin, Threonin, Tryptophan, Tyrosin, Valin oder Gemisch aus zwei oder mehr dieser Aminosäuren genannt werden. Das Nahrungsergänzungsmittel kann außerdem noch gamma-Aminobuttersäure (GABA) enthalten. Weiterhin kann das Nahrungsergänzungsmittel noch ein oder mehrere Pflanzenextrakte wie z.B. ein Extrakt der Passionsblume enthalten. Bevorzugt enthält die Zusammensetzung daher keine synthetischen Schlafmittel.

Das Nahrungsergänzungsmittel kann in unterschiedlichen Darreichungsformen bereitgestellt werden, die dem Fachmann grundsätzlich bekannt sind. Beispielsweise kann es in Form eines Pulvers oder eines (Trink-)Granulates oder auch als flüssige Zusammensetzung (z.B. durch Auflösen des Pulvers oder Granulats in Wasser) oder einer Kombination der vorangegangenen Möglichkeiten vorliegen.

Bevorzugt erfolgt die Verwendung des Nahrungsergänzungsmittels durch orale Aufnahme vor dem Schlafengehen. Die Aufnahme sollte idealerweise kurz vor dem Schlafengehen, maximal 120 Minuten bis unmittelbar vor dem Schlafengehen erfolgen.

Die Verwendung des Nahrungsergänzungsmittels erfolgt favorisiert so, dass das Kreatin in einer Tagesdosis von 1-5 g aufgenommen wird. Wenn das Nahrungsergänzungsmittel Glycin enthält, erfolgt die Verwendung des Nahrungsergänzungsmittels favorisiert so, dass das Glycin in einer Tagesdosis von 80 mg bis 600 mg bevorzugter 200 mg bis 450 mg aufgenommen wird. Sofern das Nahrungsergänzungsmittel Magnesium enthält, erfolgt die Verwendung des Nahrungsergänzungsmittels favorisiert so, dass das Magnesium in einer Tagesdosis von 50 mg bis 600 mg, bevorzugter 140 mg bis 260 mg aufgenommen wird.

Das dargestellte Nahrungsergänzungsmittel ist insbesondere für Personen geeignet, die einen individuellen Schlafmangel aufweisen, unter Schlafentzug leiden, Probleme mit dem Schlaf-Wach-Rhythmus bei Reisen haben (Jet Lag) oder einen erhöhten Schlafbedarf haben. Prinzipiell ist das dargestellte Nahrungsergänzungsmittel sowohl für alle ohne Schlafstörungen als auch Personen mit Schlafstörungen geeignet.

Das oben beschriebene Nahrungsergänzungsmittel kann demnach zur Reduktion des natürlichen Schlafbedarfs, einer beschleunigten schlafspezifischen Regeneration, sowie einer Verringerung des Müdigkeitsgefühl und bessere Anpassung an neue Zeitzonen (Minimierung von Jetlag) nach Reisen durch ein öder mehrere Zeitzonen verwendet werden.

Der beanspruchte Schutzumfang ergibt sich aus den Ansprüchen.

**Beispiele 1**

| **Beispiel 1** | Menge | RDA (%) |
|---|---|---|
| Vitamin B1 | 1,2 mg | 100 |
| Vitamin B2 | 1,4 mg | 100 |
| Niacin | 16 mg | 100 |
| Vitamin B6 | 1,5 mg | 100 |
| Panthothensäure | 6 mg | 100 |
| Biotin | 50 µg | 100 |
| Vitamin C | 80 mg | 100 |
| Magnesium | 200mg | 100 |
| Zink | 10mg | 100 |
| Creatin | 2000 mg | 100 |
| Glycin | 300 mg | 100 |

**Beispiel 2**

| | Menge | RDA (%) |
|---|---|---|
| Vitamin B1 | 0,9 mg | 75 |
| Vitamin B2 | 1,1mg | 75 |
| Niacin | 12 mg | 75 |
| Vitamin B6 | 1,1 mg | 75 |
| Panthothensäure | 4,5 mg | 75 |
| Biotin | 38 µg | 75 |
| Vitamin C | 80 | 100 |
| Vitamin B12 | 3 µg | 100 |
| Magnesium | 45 mg | 15 |
| Zink | 7,5 mg | 75 |
| Creatin | 2000 mg | - |
| Alanin | 300 mg | - |
| Arginin | 142 mg | - |
| Cystein | 142 mg | - |
| Histidin | 150 mg | - |
| Glycin | 145 mg | - |
| Serin | 353 mg | - |
| Threonin | 467 mg | - |
| Tryptophan | 80 mg | - |
| Tyrosin | 140 mg | - |
| Valin | 350 mg | - |

**Beispiel 3**

| | Menge | RDA (%) |
|---|---|---|
| Vitamin B1 | 0,6 mg | 50 |
| Vitamin B2 | 0,7 mg | 50 |
| Niacin | 8 mg | 50 |
| Vitamin B6 | 0,7 mg | 50 |
| Panthothensäure | 3 mg | 50 |
| Biotin | 25 µg | 50 |
| Vitamin C | 40 mg | 50 |
| Magnesium | 150 mg | 75 |
| Zink | 6 mg | 60 |
| Creatin | 800 mg | - |
| Vitamin B12 | 3 µg | 100 |
| Passionsblume | 250 mg | |
| Hopfenextrakt | 4,8 mg | |

## Patentansprüche

1. Verwendung eines Nahrungsergänzungsmittels enthaltend Kreatin zur Reduktion des natürlichen Schlafbedarfs.

2. Verwendung eines Nahrungsergänzungsmittels enthaltend Kreatin zur schnelleren Anpassung der zirkadianen Rhythmik an neue Zeitzonen.

3. Verwendung gemäß Anspruch 1-2, wobei das Nahrungsergänzungsmittel 120 Minuten bis unmittelbar vor dem Schlaf eingesetzt wird.

4. Verwendung eines Nahrungsergänzungsmittels nach Ansprüchen 1-3 weiterhin enthaltend Glycin.

5. Verwendung eines Nahrungsergänzungsmittels nach einem der vorstehenden Ansprüche, weiterhin enthaltend ein oder mehrere Vitamine der Vitamin-Gruppen A, B, C, D, E, F, H und/ oder einen oder mehrere Mineralstoffe, bevorzugt Magnesium.

6. Verwendung eines Nahrungsergänzungsmittels nach einem der vorstehenden Ansprüche, weiterhin enthaltend ein oder mehrere Spurenelemente, bevorzugt Zink.

7. Verwendung eines Nahrungsergänzungsmittels nach Anspruch 4, weiterhin enthaltend ein oder mehrere der folgenden proteinogenen alpha-Aminosäuren: Alanin, Arginin, Asparaginsäure, Cystein, Histidin, Prolin, Serin, Threonin, Tryptophan, Tyrosin, Valin oder ein Gemisch aus zwei oder mehr dieser Aminosäuren.

## Claims

1. Use of a dietary supplement containing creatine to reduce natural sleep need/ sleep pressure.

2. Use of a dietary supplement containing creatine for a faster adaptation of the circadian rhythm to new time zones.

3. Use according to claim 1-2, wherein the dietary supplement is used for 120 minutes until just before going to sleep.

4. Use of a dietary supplement according to claims 1-3 further containing glycine.

5. Use of a dietary supplement according to any one of the preceding claims, further containing one or more vitamins of the vitamin groups A, B, C, D, E, F, H and / or one or more minerals, preferably magnesium.

6. Use of a dietary supplement according to any one of the preceding claims, further containing one or more trace elements, preferably zinc.

7. Use of a dietary supplement according to claim 4, further containing one or more of the following proteinogenic alpha-amino acids: alanine, arginine, aspartic acid, cysteine, histidine, proline, serine, theronin, thryptophan, tyrosine, valine or a mixture of two or more of these Amino acids.

## Revendications

1. Utilisation d'un complément alimentaire contenant de la créatine pour réduire les besoins naturels en sommeil.

2. Utilisation d'un complément alimentaire contenant de la créatine pour une adaptation plus rapide du rythme circadien aux nouveaux fuseaux horaires.

3. Utilisation selon la revendication 1-2, dans laquelle le complément alimentaire est utilisé pendant 120 minutes jusqu'au moment de dormir.

4. Utilisation d'un complément alimentaire selon les revendications 1 à 3, comprenant en outre de la glycine.

5. Utilisation d'un complément alimentaire selon l'une quelconque des revendications précédentes, comprenant en outre une ou plusieurs vitamines des groupes de vitamines A, B, C, D, E, F, H et / ou un ou plusieurs minéraux, de préférence du magnésium.

6. Utilisation d'un complément alimentaire selon l'une quelconque des revendications précédentes, contenant en outre un ou plusieurs oligo-éléments, de préférence du zinc.

7. Utilisation d'un complément alimentaire selon la revendication 4, comprenant en outre un ou plusieurs des acides alpha-aminés protéinogènes suivants: alanine, arginine, acide aspartique, cystéine, histidine, proline, sérine, théronine, thryptophane, tyrosine, valine ou un mélange de deux ou plusieurs de ceux-ci acides aminés.
